# EUROPEAN PATENT APPLICATION

(11) **EP 1 588 883 A2**
(43) Date of publication of application: **26.10.2005**
(21) Application number: 05102716.7
(22) Date of filing: 07.04.2005
(51) Int. Cl.: B60J 7/10

(54) **Tension hook for canvas tilts of road trains and trailers**

(30) Priority: 21.04.2004 IT GE20040031
(71) Applicant: Giacobini, Marina, 16165 Genova (IT)
(72) Inventor: Giacobini, Marina, 16165 Genova (IT)
(74) Representative: Porsia, Attilio

(57) **Abstract**

Tension hook for canvas tilts of road trains and trailers. The tension hook comprises a base plate (6); a lever (1) pivoted on the said base plate (6); a hook element (101) carried by one end of the said lever (1); and a smaller plate (8) which can be guided slidably along the said base plate, the said smaller plate (8) being provided at one end with means for fixing it to the tilt of the vehicle, locking means being provided for adjusting the position of the said smaller plate (8) with respect to the base plate (6).

## Description

The present invention relates to tension hooks for securing the sides of tilts of road trains or trailers.

A tension hook for a canvas tilt is known from DE 200 04 777 U1.

This known hook essentially comprises a base element, which is secured to the side of the tilt of the vehicle, and a second element suspended from the said first element and carrying the hook for attachment to the side of the lorry (or to a part associated with the said side). One of the disadvantages of this known hook consists in the fact that it can easily open under the effect of the vibrations and/or the stresses to which it is subjected during the operation of the vehicle.

A further disadvantage of this known hook is the difficulty of adjusting the element carrying the hook itself with respect to the base element.

The object of the present invention is therefore to provide a tension hook for canvas tilts of road trains and/or trailers of the type indicated above, which can overcome the drawbacks of the known hooks, which allows the element carrying the hook to be rapidly secured to the base element, and which is inexpensive.

The hook according to the invention is described in the attached Claim 1.

Further characteristics and advantages of the hook according to the present invention will be revealed more fully in the following detailed description of a preferred embodiment thereof, which refers to the attached drawings, in which:
Figure 1 is a schematic side elevation of a covered lorry, provided with a series of hooks according to the invention on the side of the tilt;
Figure 2 is a plan view from the front (in other words from the visible side when the hook is fitted) of a hook according to the invention;
Figure 3 is a view on an enlarged scale of the base element of the hook of Figure 2;
Figure 4 is a view in longitudinal section, on an enlarged scale, of the hook of Figure 2, in the condition preceding its attachment to the side element of the covered vehicle, and
Figure 5 is a view corresponding to that of Figure 4, showing the hook in the fully attached position.

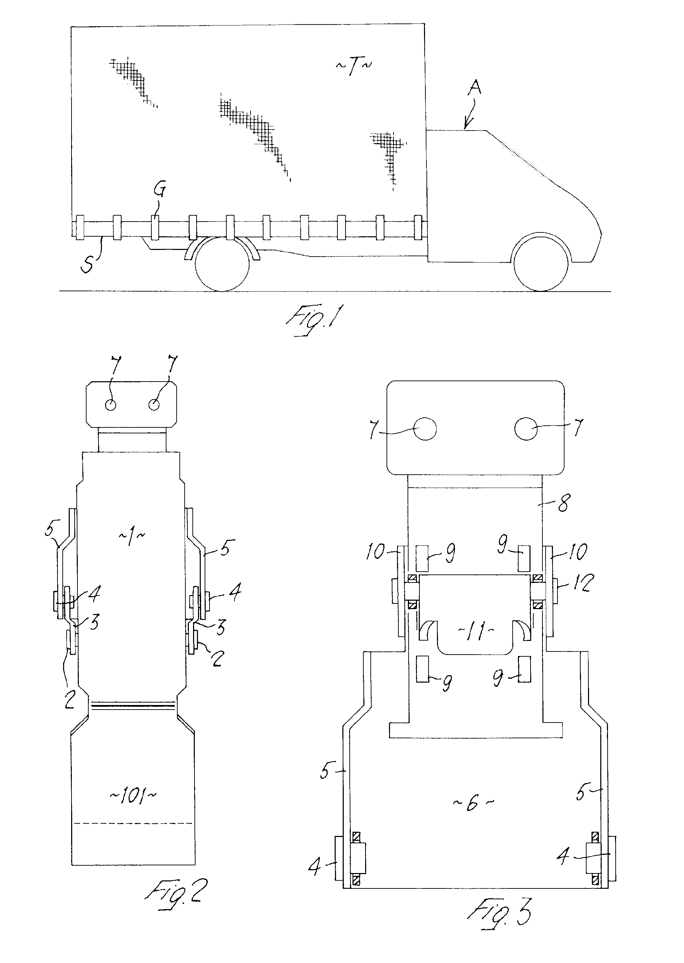

With reference to the drawings, and with particular reference to Figure 1, the letter A indicates a lorry provided with a suitable supporting structure (not shown) around the load bed which carries a protecting and covering tilt T. Metal elements or hooks G are fixed to the sides of the tilt T for attachment to a structure S on the frame of the load bed of the lorry A.

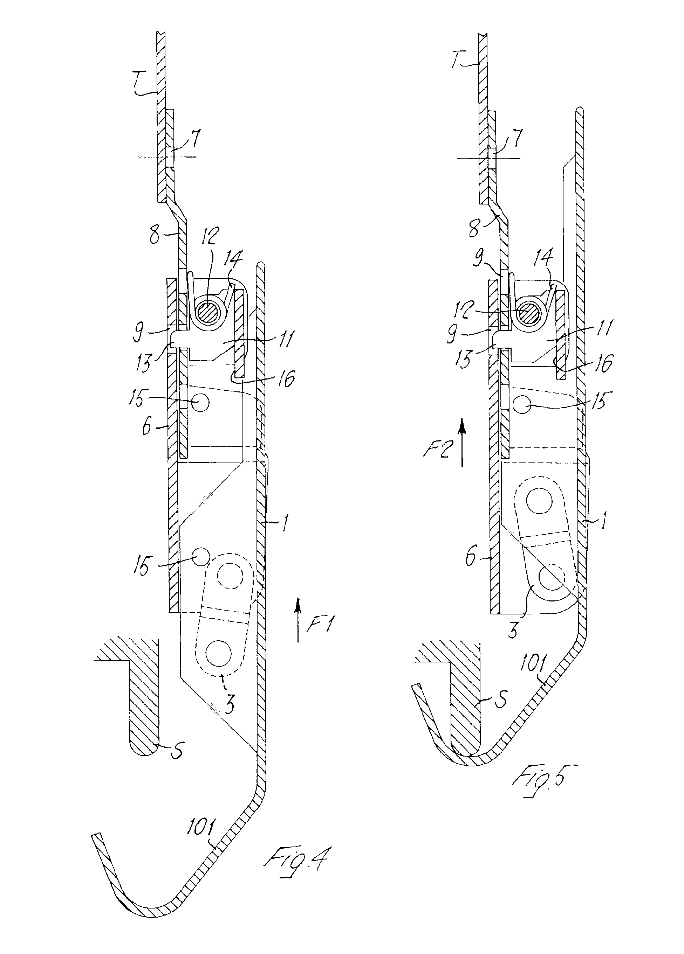

A hook G according to the invention will now be described with reference to Figures 2 and 3. This hook comprises an element or lever 1 pivoted by means of the rivets 2 on one end of each of two short lever arms 3, the other end of each arm being pivoted by means of the rivets 4 on side elements 5 (see Figure 2) forming part of a base plate 6. The plate 6 carries a sliding smaller plate 8 having one end designed to be fixed to the side of the tilt T, for example by means of rivets (not shown) passing through the holes 7 formed in the end part of the smaller plate 8. The smaller plate 8 is provided at regular intervals with a double set of holes 9 which extend along two longitudinal directrices of this plate, and the smaller plate 8 is guided slidably laterally between two lateral guide uprights 10 of the plate 6 between which a catch 11 is pivoted at 12, the catch being provided with two teeth 13 (see Figures 4 and 5) which can engage in the holes 9 of the smaller plate 8, for the purposes described below. Each of the teeth 13 of the catch 11 has one inclined and/or rounded side, so that the plate 8 can be made to slide by a snap movement with respect to the base plate 6 in the direction of the arrow F only, while it is prevented from sliding in the opposite direction by the engagement of the teeth of the catch 11 in the holes 9. A spring 14 wound around the pin 12 of the catch 11 pushes it constantly into the engagement position, as described below. Finally, the number 101 indicates the hook element located on the continuation of the lever 1. The number 15 indicates a hole for the passage of a cable to be used for customs purposes.

The operation of the attachment device detailed above will now be described with reference to Figures 4 and 5.

With reference to Figure 4 initially, when the attachment device G has been secured at one end to the side of the tilt T by means of the holes 7 in the smaller plate 8, the lever 1 is swung downwards around short lever arms 3, so as to bring the hook element 101 itself to a position below the side S of the load bed of the lorry A.

At this point, the hook 101 is simply pushed in the direction of the arrow F1 to bring the whole assembly into the position shown in Figure 5.

When it is desired to adjust the tension of the device, it is simply necessary to push the base plate 6 in the direction of the arrow F2, so that the teeth of the catch are made to snap into the holes 9 located immediately after their initial position, thus increasing the tension of the device. To return the catch to the initial position, it is simply necessary to lift the appendage 16 to unlock the said catch.

Although the hook 101 is shown as integral with the lever 1 in the illustrated embodiment, it can clearly be suspended from this lever with an articulated joint, without thereby modifying the above description in any way.

The described device combines maximum simplicity of construction with maximum security. This is because, in the closed position, it is impossible to perform any action on the attachment device without opening it, and without breaking any customs cable that may be passed through the hole 15.

Clearly, the present invention comprises all variant embodiments which fall within the wider scope of the inventive concept, substantially as claimed below.

## Claims

1. Tension hook for canvas tilts of road trains and trailers, **characterized in that** it comprises a base plate (6); a lever (1) pivoted on the said base plate (6); a hook element (101) carried by one end of the said lever (1); and a smaller plate (8) which can be guided slidably along the said base plate, the said smaller plate (8) being provided at one end with means for fixing it to the tilt of the vehicle, locking means being provided for adjusting the position of the said smaller plate (8) with respect to the base plate (6).

2. Hook according to Claim 1, **characterized in that** the said lever (1) is pivoted on one end of each of two short lever arms (3) whose second end is pivoted on side elements 5 (see Figure 2) forming part of a base plate (6).

3. Hook according to the preceding claims, in which the said base plate (6) carries a sliding smaller plate (8) having one end designed to be fixed to the side of the tilt (T).

4. Hook according to the preceding claims, in which the said smaller plate (8) is provided at regular intervals with a double set of holes (9) which extend along two longitudinal directrices of this smaller plate (8), the said smaller plate (8) being guided slidably laterally between two lateral guide uprights (10) of the plate (6).

5. Hook according to the preceding claims, in which a catch (11) is pivoted between the said lateral guide uprights (10) of the plate (8), the catch being provided with teeth (13) which can engage in the holes (9) of the smaller plate (8).

6. Hook according to Claim 5, in which each of the said teeth (13) of the catch (11) has one inclined and/or rounded side, so that the plate (8) can be made to move by a snap movement with respect to the base plate 6 in one direction only, while it is prevented from sliding in the opposite direction.

7. Hook according to any one of the preceding claims, in which the said hook (101) is suspended by an articulated joint from the lever (1).

8. Hook according to any one of the preceding Claims 1 to 6, in which the said hook (101) is formed in one piece with the said lever (1).
